# EUROPÄISCHE PATENTSCHRIFT

(11) **EP 0 906 528 B1**
(45) Veröffentlichungstag und Bekanntmachung des Hinweises auf die Patenterteilung: **07.08.2002**
(21) Anmeldenummer: 97927187.1
(22) Anmeldetag: 16.06.1997
(51) Int. Cl.: F16J 15/32

(54) **DICHTUNGSANORDNUNG**
SEAL
GARNITURE D'ETANCHEITE

(30) Priorität: 17.06.1996 DE 29610628 U
(43) Veröffentlichungstag der Anmeldung: 07.04.1999
(73) Patentinhaber: Carl Freudenberg KG, 69469 Weinheim (DE)
(72) Erfinder: KAHLE, Otto, D-22417 Hamburg (DE); WERTHER, Hans, D-21220 Seevetal (DE)
(86) Internationale Anmeldenummer: EP9703125
(87) Internationale Veröffentlichungsnummer: WO9748924

(56) Entgegenhaltungen:
- DE-U- 8 704 249
- US-A- 4 611 931

## Beschreibung

Die Erfindung betrifft eine Dichtungsanordnung mit zwei relativ zueinander axial und/oder drehend bewegten Maschinenteilen, die zwischen konzentrischen Dichtflächen einen Dichtring einschließen. Dieser besteht aus einem elastischem Werkstoff und weist einen radial innen liegenden Halteteil, einen radial außen liegenden Dichtteil und einen diese verbindenden, nachgiebigen Verbindungsteil auf. Der Halteteil dichtet statisch gegenüber dem inneren Maschinenteil ab und sitzt mit Vorspannung auf der inneren Dichtfläche, die im folgenden auch als Basisdichtfläche bezeichnet wird. Zur Erzeugung der Vorspannung ist der Innendurchmesser des Halteteils kleiner als der der Basisdichtfläche. Der Dichtteil liegt mir Vorspannung an der ihm gegenüber beweglichen, äußeren Gegendichtfläche an. Halteteil und Dichtteil liegen im wesentlichen in derselben Radialebene. Im allgemeinen ist der Dichtring in einer Haltenut des inneren Maschinenteils montiert.

Bekannte Dichtungsanordnungen dieser Art (US-A-4 611 931; Prospekt "Airzet-Dichtung" der Anmelderin) erzielen die Nachgiebigkeit des Verbindungsteils bei einstückiger Ausführung des Dichtrings dadurch, daß durch zwei gegeneinander radial versetzte, nutförmige Einschnitte ein Z-förmiger Verlauf des Profils zwischen dem Halteteil und dem Dichtteil gebildet wird. Das hat zur Folge, daß der abzudichtende Druck in einer dieser Nuten auf die Rückseite des Dichtteils wirkt und dadurch die Dichtpressung proportional zum abzudichtenden Druck erhöht. Damit der abzudichtende Druck diese Nut erreicht, weisen die Stirnflächen des Dichtteils Vorsprünge oder Durchgangsquerschnitte auf, die eine vollflächige und absperrende Anlage des Dichtteils an den Flanken der den Dichtring aufnehmenden Nut verhindern. Die Proportionalität der Dichtpressung zum abzudichtenden Druck gestattet es, die Anfangsvorspannung des Dichtteils gering zu halten, um dadurch auch die Haftreibung ("Slip-Stick-Effekt") gering zu halten. Gleichwohl muß eine gewisse anfängliche Dichtpressung vorhanden sein, die durch elastische Vorspannung erzielt wird. Diese wird bei den bekannten Dichtanordnungen dadurch erreicht, daß der Durchmesser der zur Anlage an der Gegendichtfläche bestimmten Umfangsfläche des Dichtteils etwas größer ist als der Durchmesser der Gegendichtfläche. Dies bewirkt nach dem Einbau eine Stauchung des Dichtteils in Umfangsrichtung. Daraus resultiert eine Neigung desselben zu schlangenförmigem Verlauf innerhalb der den Dichtring haltenden Nut. Das bedeutet, daß die Relativlage des Dichtteils, im Längsschnitt gesehen, nicht an allen Stellen des Umfangs gleich ist und damit auch die Dichtwirkung unterschiedlich und teilweise nicht optimal ist. Da die Vorspannung des Dichtteils so groß sein muß, daß sie auch noch an denjenigen Stellen Dichtheit gewährleistet, an denen die Voraussetzungen dafür am ungünstigsten sind, muß die Vorspannung größer bemessen werden, als es bei überall optimaler Ausrichtung des Dichtteils erforderlich wäre.

Es ist ein Abstreifring bekannt (DE-U-8704249), der sich aus einem radial inneren Halteteil, einem radial äußeren Abstreifer und einem diese Teile verbindenden, nachgiebigen Verbindungsteil zusammensetzt. Der Abstreifer besitzt eine Lippe, die die Abstreifaufgabe und ggf. auch Dichtaufgaben erfüllt und zu diesem Zweck gegenüber der Gegendichtfläche durch Deformation auf einen Durchmesser vorgespannt ist, der geringer ist als der entspannte Durchmesser. Damit diese Lippe während des Betriebs ihre korrekte Stellung zur Gegendichtfläche beibehält, ist der Abstreifer zusätzlich mit einem Führungsring versehen, dessen zylindrische Umfangsfläche denselben Durchmesser wie die Gegendichtfläche aufweist und sich an dieser abstützt. Da ein solcher Stützring zusätzliche Reibung an der Gegendichtfläche verursacht, ist er für Dichtringe, die eine geringe Anfangsreibung gegenüber der Gegendichtfläche haben sollen, nicht anwendbar.

Der Erfindung liegt daher die Aufgabe zugrunde, die Voraussetzungen für über den Umfang gleiche Lage des Dichtteils gegenüber der Gegendichtfläche bei Dichtungsanordnungen der eingangs genannten Art zu verbessern.

Die erfindungsgemäße Lösung besteht darin, daß die Vorspannung des Dichtteils im wesentlichen durch die Dehnung des Halteteils erzeugt ist. Das bedeutet, daß der Durchmesser der Gegendichtfläche etwa so groß ist wie der Durchmesser des mit der Gegendichtfläche zusammenwirkenden Teils des Dichtteils im entspanntem Zustand. Der Halteteil wird so stark gedehnt, daß er über den Verbindungsteil den Dichtteil gegen die Gegendichtfläche drückt, ohne daß dieser gegenüber seinem entspannten Zustand wesentlich gedehnt oder gestaucht wird. Der Dichtteil erfährt bei der Montage des Dichtrings auf der Basisdichtfläche des inneren Maschinenteils eine Dehnung, die anschließend zumindest teilweise wieder rückgängig gemacht wird, wenn der innere Maschinenteil mit dem Dichtring in den äußeren Maschinenteil eingesetzt wird. Eine Umfangsstauchung des Dichtteils, die ihn zu einer schlangenförmigen Verformung veranlassen könnte, wird dadurch vermieden. Vorzugsweise ist der Durchmesser der Gegendichtfläche nicht geringer als der entspannte Durchmesser des Dichtteils.

Da die elastische Vorspannung des Dichtteils geringer sein kann als in entsprechenden bekannten Anordnungen, kommt der Ausbildung der Dichtkante gesteigerte Bedeutung zu. Zweckmäßigerweise wird sie zwischen zwei im Längsschnitt etwa dachförmigen Schrägflächen gebildet, wie dies an sich bekannt ist. Um eine innige Anlage der Dichtkante an der Gegendichtfläche durch entsprechende Verformung sicherzustellen, werden die Schrägflächen verhältnismäßig steil gegenüber der Gegendichtfläche angeordnet, nämlich zweckmäßigerweise mit einem beiderseitigen Freiwinkel von mehr als 20, vorzugsweise mehr als 25 Grad. Damit dennoch der Dichtteil hinreichend kompakt ist, um den an ihm angreifenden Kräften ausreichenden Verformungswiderstand entgegensetzen zu können, insbesondere um nicht unter den Reibkräften zu stark gestülpt zu werden, sind die Schrägflächen zweckmäßigerweise im Längsschnitt konkav ausgebildet. Nur in der Nachbarschaft der Dichtkante haben sie einen steilen Verlauf gegenüber der Gegendichtfläche; im übrigen Bereich verlaufen sie flacher. Die Ausbildung der Dichtkante und der Schrägflächen verdient einen gegebenenfalls von den Merkmalen der Ansprüche 1 bis 2 unabhängigen Schutz.

Die Erfindung wird im folgenden näher unter Bezugnahme auf die Zeichnung erläutert, die ein vorteilhaftes Ausführungsbeispiel veranschaulicht. Es zeigen:
- Fig.1: das Profil des erfindungsgemäßen Dichtrings im entspannten Zustand und
- Fig.2: im Einbauzustand.

Der Dichtring besteht aus einem Halteteil 1, einem Dichtteil 2 und einem Z-förmig zwischen diesen beiden Teilen liegenden Verbindungsteil 3, dessen Gestalt durch Nuten 4 und 5 bestimmt wird. Der Dichtring ist zum Einbau in eine Nut 6 eines nicht weiter dargestellten Kolbens 7 bestimmt, zu dem ein Zylinder 8 gehört, von dem lediglich ein Teil der Gegendichtfläche 9 dargestellt ist. Sämtliche dargestellten Teile sind Rotationskörper zu einer gemeinsamen, außerhalb des Zeichnungsblatts liegenden Achse. Der Nutgrund 16 der Nut bildet die Basisdichtfläche, auf der der Halteteil 1 unter Vorspannung dichtend aufsitzt. Auf der mit dem Nutgrund 16 zusammenwirkenden Fläche des Halteteils 1 ist dieser zwecks besserer Abdichtung mit zwei Dichtkanten 15 versehen.

Halteteil 1 und Dichtteil 2 des Dichtrings liegen im Einbauzustand radial ineinander; das heißt ihre Stirnflächen liegen übereinstimmend mit den Flanken der Nut 6 in derselben Radiaiebene. Dabei werden die Stirnflächen des Dichtteils 2 von vorspringenden Leisten 10 und 11 gebildet, zwischen denen Durchgangsquerschnitte 12 vorhanden sind, um den Medien beiderseits des Dichtrings Zutritt zu den Nuten 4 und 5 zu verschaffen. Dies ist die Voraussetzung dafür, daß die Rückseite des Dichtteils 2 von der abzudichtenden Druckdifferenz beaufschlagt wird.

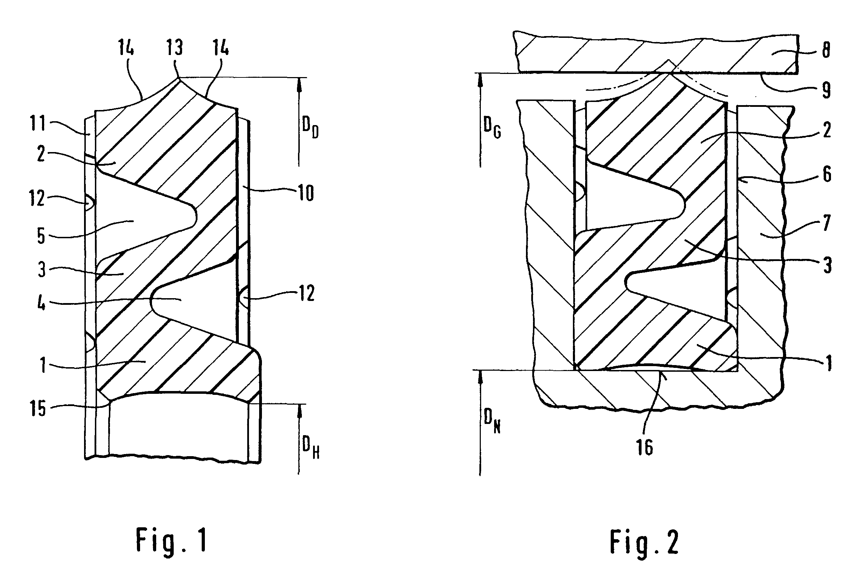

Der Dichtteil 2 wirkt mit der Gegendichtfläche 9 über eine Dichtkante 13 zusammen, die von zwei Schrägflächen 14 definiert wird, die in ihrem der Dichtkante 13 benachbarten Bereich steiler gegenüber der Gegendichtfläche 9 verlaufen als in ihrem weiter entfernt davon liegendem Bereich; sie sind demzufolge konkav ausgebildet. Dadurch erhält der Dichtteil 2 eine größere durchschnittliche radiale Dicke als wenn die Schrägflächen 14 mit derselben Neigung, die sie in unmittelbarer Nachbarschaft der Dichtkante 13 aufweisen, geradlinig durchgeführt wären. Dies macht ihn steifer insbesondere gegenüber den ihn um die Umfangsachse zu tordieren (stülpen) bestrebten Reibungskräften, die an der Dichtkante 13 angreifen. Die Dichtkante 13 kann abgerundet ausgeführt sein. Mindestens erfährt sie eine Abrundung oder Abflachung infolge der Vorspannung im eingebauten Zustand (Fig.2).

Erfindungsgemäß ist der Durchmesser D_{G} der Gegendichtfläche 9 etwa so groß wie oder größer als der Durchmesser D_{D} der Dichtkante des Dichtteils 2. Hingegen ist der Durchmesser D_{N} des Nutgrunds 16 der Nut 6 beträchtlich größer als der Durchmesser D_{H} der damit zusammenwirkenden Fläche des Halteteils 1 des Dichtrings. Und zwar sind die Durchmesser sowie die Steifigkeit des Verbindungsteils 3 und des Dichtteils 2 so bemessen, daß der Dichtteil 2 nach der Montage des Dichtrings in der Nut 6 gegenüber der Gegendichtfläche 9 ein in Fig.2 strichpunktiert angedeutetes Übermaß aufweist, daß so groß ist, daß nach der Montage in der Gegendichtfläche 9 und der dadurch bewirkten Deformation der Dichtteil auf ein Maß zurückgedrängt wird, daß etwa seinem entspannten Maß entspricht oder gar ein wenig größer ist. Dadurch werden Umfangs-Druckspannungen im Dichtteil 2 vermieden, die zu den eingangs erläuterten, nachteiligen Auswirkungen führen würden.

## Patentansprüche

1. Dichtungsanordnung mit zwei relativ zueinander bewegten Maschinenteilen (7, 8), die einen Dichtring (1, 2, 3), bestehend aus einem radial inneren Halteteil (1), einem radial äußeren Dichtteil (2) und einem diese verbindenden, nachgiebigen Verbindungsteil (3), zwischen konzentrischen Dichtflächen (9, 16) einschließen, von denen die innere, gegenüber dem Dichtring unbewegliche Basisdichtfläche (16) einen größeren Durchmesser (D_{N}) als der Innendurchmesser (D_{H}) des Halteteils aufweist und die äußere, gegenüber dem Dichtring bewegliche Gegendichtfläche (9) von dem Außenumfang (13) des Dichtteils (2) unter Vorspannung beaufschlagt ist, **dadurch gekennzeichnet, daß** die Vorspannung des Dichtteils (2) im wesentlichen durch die Dehnung des Halteteils (1) bewirkt ist.

2. Dichtungsanordnung nach Anspruch 1, **dadurch gekennzeichnet, daß** der Durchmesser (D_{G}) der Gegendichtfläche (9) nicht oder nur unwesentlich geringer ist als der entspannte Außendurchmesser (D_{D}) des Dichtteils (2).

3. Dichtungsanordnung nach Anspruch 1 oder 2 **dadurch gekennzeichnet, daß** der Dichtteil (2) mindestens eine Dichtkante (13) zwischen zwei im Längsschnitt etwa dachförmigen Schrägflächen (14) bildet.

4. Dichtungsanordnung nach Anspruch 3 **dadurch gekennzeichnet, daß** die Dichtkante (13) abgerundet ist.

5. Dichtungsanordnung nach Anspruch 3 oder 4 **dadurch gekennzeichnet, daß** die Schrägflächen (14) im Längsschnitt konkav sind.

## Claims

1. A sealing arrangement, with two machine parts (7,8) which are moveable relative to one another and enclose a sealing ring (1,2,3), comprising a radially inner holding part (1), a radially outer sealing part (2) and a flexible connection part (3) connecting these, between concentric sealing surfaces (9,16), of which the inner basic sealing surface (16) immovable in relation to the sealing ring has a larger diameter (D_{N}) than the inside diameter (D_{H}) of the holding part and the outer countersealing surface (9) moveable in relation to the sealing ring is acted upon with prestress by the outer circumference (13) of the sealing part (2), **characterized in that** the prestress of the sealing part (2) is brought about essentially by the expansion of the holding part (1).

2. A sealing arrangement according to claim 1, **characterized in that** the diameter (D_{G}) of the countersealing surface (9) is no smaller or only insignificantly smaller than the relaxed outside diameter (D_{D}) of the sealing part (2).

3. A sealing arrangement according to claim 1 or 2, **characterized in that** the sealing part (2) forms at least one sealing edge (13) between two oblique surfaces (14) which are approximately roof-shaped in longitudinal section.

4. A sealing arrangement according to claim 3, **characterized in that** the sealing edge (13) is rounded.

5. A sealing arrangement according to claim 3 or 4, **characterized in that** the oblique surfaces (14) are concave in longitudinal section.

## Revendications

1. Garniture d'étanchéité avec deux pièces de machine (7,8) en déplacement l'une par rapport à l'autre, qui enferment une bague d'étanchéité (1, 2, 3) constituée d'une partie radialement intérieure de maintien (1), d'une partie radialement extérieure d'étanchéité (2) et d'une partie de liaison (3) déformable qui relie les précédentes, entre des surfaces d'étanchéité concentriques (9, 16), parmi lesquelles la surface d'étanchéité de base (16) intérieure, non mobile par rapport à la bague d'étanchéité, présente un diamètre (D_{N}) plus grand que le diamètre intérieur (D_{H}) de la partie de maintien, et la surface opposée d'étanchéité (9) extérieure, mobile par rapport à la bague d'étanchéité, est sollicitée par la périphérie extérieure (13) de la partie d'étanchéité (2) sous une précontrainte, **caractérisée en ce que** la précontrainte de la partie d'étanchéité (2) est réalisée essentiellement par la dilatation de la partie de maintien (1).

2. Garniture d'étanchéité selon la revendication 1, **caractérisée en ce que** le diamètre (D_{G}) de la surface d'étanchéité complémentaire (9) n'est pas inférieur ou n'est que de peu inférieur au diamètre extérieur (D_{D}) de la pièce d'étanchéité (2) non sollicitée.

3. Garniture d'étanchéité selon la revendication 1 ou 2, **caractérisée en ce que** la pièce d'étanchéité (2) forme au moins une arête d'étanchéité (13) entre deux surfaces obliques (14) sensiblement en forme de toit en coupe longitudinale.

4. Garniture d'étanchéité selon la revendication 3, **caractérisée en ce que** l'arête d'étanchéité (13) est arrondie.

5. Garniture d'étanchéité selon la revendication 3 ou 4, **caractérisée en ce que** les surfaces obliques (14) sont concaves en coupe transversale.
